# EUROPEAN PATENT SPECIFICATION

(11) **EP 1 981 916 B1**
(45) Date of publication and mention of the grant of the patent: **29.07.2009**
(21) Application number: 07703331.4
(22) Date of filing: 07.02.2007
(51) Int. Cl.: C08C 19/38, C08L 15/00, C08L 19/00

(54) **POLYBUTADIENE COMPOSITIONS, METHODS AND ARTICLES**
POLYBUTADIENZUSAMMENSETZUNGEN, VERFAHREN UND GEGENSTÄNDE
COMPOSITIONS DE POLYBUTADIENE, PROCEDES ET ARTICLES

(30) Priority: 09.02.2006 US 771913 P
(43) Date of publication of application: 22.10.2008
(73) Proprietor: Sartomer Technology Co., Inc., Wilmington, DE 19803 (US)
(72) Inventor: HENNING Steven Kristofer, Downingtown, PA 19335 (US); KLANG Jeffrey Allan, West Chester, PA 19382 (US); COSTIN Richard C., West Chester, PA 19380 (US)
(74) Representative: Killis, Andréas
(86) International application number: PCT/EP2007/001048
(87) International publication number: WO 2007/090634

(56) References cited:
- US-A1- 2005 054 798
- US-A1- 2005 154 121

## Description

This invention relates generally to improved elastomeric compositions useful for forming vulcanized rubber, methods for making such vulcanized rubber and vulcanized rubber articles.

Elastomeric compositions must be vulcanized to provide useful rubber properties. Vulcanization reactions result in chemical crosslinks between proximal polymer chains. By crosslinking elastomeric polymers, useful materials can be formed which possess physical properties such as high tensile strengths, low compression set, recoverable elongations, high modulus and improved dynamic performances.

Peroxides are capable of vulcanizing most elastomeric polymer types, including unsaturated and saturated elastomers. Coagents are radical-accepting compounds which increase the efficiency of crosslink formation. Coagents are typically monomeric in structure and contain at least two radical accepting reactive sites. The user of coagents synergistically with peroxides helps expand the utility of this vulcanization process.

Synergistic use of multifunctional coagents can improve the efficiency of peroxide cure by increasing the crosslink density of the network and by altering the crosslink composition. There are many functional compounds that have been used as coagents for peroxide cure. The final properties of the formed network will depend on the reactivity and structure of the coagent.

Typically, the choice of coagent is made in order to balance several desired physical properties of the resulting vulcanizate. Often, the use of acrylate-containing coagents increases the rate of vulcanization and can result in compositions which tend to crosslink prematurely or possess little scorch safety. This problem has been mediated through the judicious introduction of scorch-retarding additives to the coagent, rubber composition or peroxide itself. In this way, the onset of vulcanization can be delayed so that sufficient process safety is imparted to the rubber composition. The use of coagents currently available often results in a trade-off between maintaining scorch safety and improving final physical properties. For example, common multifunctional acrylates can improve the modulus and tensile strength of peroxide-cured elastomeric compositions, but at reduced scorch safety. Low molecular weight vinyl-containing polybutadienes are also used as coagents for peroxide cure. Using such materials maintains the scorch safety of the compound, but does not achieve the modulus or tensile strength of compounds that employ acrylate or other more reactive coagents.

In addition, multifunctional acrylates typically provide optimal performance at relatively low loadings and any gain in physical properties is eroded at higher loadings, probably due to limited solubility of multifunctional acrylates in most rubber compositions.

Therefore, there exists a need for a multifunctional acrylate coagent that can provide improvements in the physical properties of peroxide-cured rubber compositions while maintaining the scorch safety. There is also a need to increase the loadings at which the multifunctional acrylate produced the greatest positive impact on the physical properties of the rubber compound.

There have been several different prior art proposals concerning the use of acrylate-containing coagents to improve physical properties while mediating the impact of such additives on the scorch safety of the compound.

U.S. Pat. No. 4,857,571 describes the use of methyl-substituted aminoalkyl phenols as inhibitors or scorch retarders in concert with monomeric multifunctional acrylate and methacrylate coagents. Improved scorch times are demonstrated at the expense of crosslink density.

U.S. Pat. No. 5,696,190 describes the formation of acid salts of methyl-substituted aminoalkyl phenols as improved scorch retarders in concert with monomeric multifunctional acrylate and methacrylate coagents. The salt forms of the scorch inhibitors improve performance when compared to the non-salt forms, but again acrylate-functional polybutadienes are not considered nor anticipated to provide similar scorch protection.

U.S. Pat. No. 5,272,213 describes the use of mixtures of hydroquinone and sulfenamides to effect scorch safety in peroxide cured elastomer systems utilizing polyacrylate coagents. Crosslink density and scorch safety improvements are demonstrated. The scope is limited to polyacrylate coagents and acrylate-functional polybutadienes are not considered.

U.S. Pat. No. 3,974,129 describes a curable resin composition consisting of the reaction product of an anhydride-adducted low molecular weight polybutadiene and a hydroxyalkyl acrylate to form an acrylate-grafted polydiene resin. The acrylate-grafted polybutadiene material was used in the production of curable resin and application in rubber articles was not anticipated. The acrylate-polybutadiene adduct was not telechelic.

U.S. Pat. No. 4,295,909 describes the use of a urethane-acrylate capped prepolymer based on a polybutadiene polyol in a polymerizable adhesive and sealant formulation. The microstructure of the parent polybutadiene is at least 70% 1,4-configuration. Application in rubber compounds was not anticipated.

U.S. Pat. No. 5,747,551 describes the use of an acrylate-grafted polybutadiene as a minor component in a UV-curable pressure sensitive adhesive composition. The acrylate functionality on the polybutadiene is not telechelic, nor are rubber applications anticipated.

U.S. Pat. No. 6,491,598 describes the use of an acrylate polybutadiene in a peroxide-cured rubber composition useful in the production of an endless power transmission belt. The acrylated polybutadienes disclosed are products of a grafting reaction to append acrylate functionality to the polybutadiene backbone. These materials are again not telechelic in structure. In addition, the invention requires an additional curative coagent (monomeric) to be included with the acrylated polybutadiene. The utility of a telechelic polybutadiene acrylate in the absence of additional monomeric coagents is not anticipated.

Publications of interest are as follows : *"*Peroxide Vulcanization of Elastomers", P. R. Dluzneski, Rubber Chem. Technol. 74, 451 (2001).

"Fundamentals of Curing Elastomers with Peroxides and Coagents", S. K. Henning and R. Costin, Paper E, 167th Spring Technical Meeting, Rubber Division, ACS, San Antonio, TX, May 16-18, 2005.

"Saret® Liquid Coagents, Multifunctional Acrylic Monomers", Sartomer Company Brochure #3800, 1998.

The prior art does not teach or suggest the use of a low molecular weight terminally-functional polybutadiene acrylate to impart both improved physical properties and scorch safety to peroxide-curable elastomeric compositions.

The present invention comprises in one aspect specific elastomeric compositions, a method for making the said elastomeric composition and articles cured therefrom. The elastomeric composition includes natural or synthetic elastomers or mixtures thereof, a free-radical source capable of initiating crosslinking reactions and one or more of the terminally-functional low molecular weight polybutadiene acrylates of high vinyl composition which acts as an effective coagent. The term "polybutadiene acrylates", unless otherwise specified should be considered as meaning "polybutadiene methacrylates and/or acrylates" and can also be cited as "polybutadiene (meth)acrylates". The composition possesses both extended scorch safety and improved physical properties without the use of additional retarding compounds whose purpose is to scavenge free radicals and delay vulcanization. The compositions and articles have increased cured tensile strength and modulus at equivalent loadings of conventional monomeric multifunctional acrylates. The elastomeric compositions of the invention can be used in applications including, but not limited to, tire components, engineered rubber products such as belts and hoses, rubber gaskets and rings, engine mounts and vibration isolation mounts, rubber rollers and rubber articles for other automotive and industrial applications.

We have discovered that alkoxylated polybutadiene acrylates, more particularly with at least one alkoxy, preferably at least one ethoxy or propoxy and more preferably one propoxy unit by each end and containing terminal acrylate (meaning as mentioned above acrylate and/or methacrylate) functionality, can improve the physical properties of peroxide-cured rubber (or elastomeric) compositions, while simultaneously providing increased scorch safety when compared to other typical monomeric multifunctional acrylate coagents.

So, the first subject of the invention relates to a peroxide-curable elastomeric (or commonly called rubber) composition comprising by weight:
(a) 100 parts of one or more elastomers
(b) from 1 to 40, preferably from 5 to 20 parts of one or more coagents, comprising one or more terminally-functional alkoxylated polybutadiene (meth)acrylates
(c) from 0 to 200, preferably up to 150 and more preferably from 50 to 100 parts of a filler material

More particularly, the said coagent may consist of one or more of the said polybutadiene (meth)acrylates.

The said polybutadiene acrylates, coagents of the invention, may have more particularly a chemical structure according to following general Formula I: 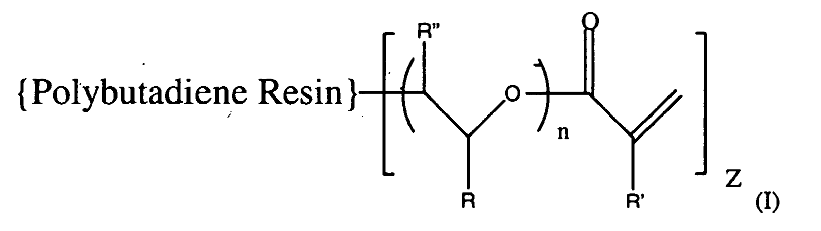 wherein
the "polybutadiene resin" being a butadiene homopolymer or copolymer radical (mono to trivalent)
R is H, Me, Et or C₆H₅,
R' is H or Me,
R" is H or Me,
n = 1 to 100, and
Z = 1 to 3

Preferred polymers of Formula I have one alkoxy (n = 1), preferably one ethoxy or propoxy and more preferably one propoxy unit, at each end of a difunctional polybutadiene (Z = 2) and contain terminal (meth)acrylate functionality. It is reminded again that "(meth)acrylate" term does mean according to the present invention "acrylate and/or methacrylate".

The invention comprises compositions comprising by weight 100 parts of one or more elastomers ; and about 1 to 40 parts of one or more terminally-functional alkoxylated polybutadiene (meth)acrylates of Formula I as coagents. These compositions are curable in the presence of free-radical generating compound such as peroxides, percarbonates or azo compounds.

The invention also comprises a method of preparing a vulcanized elastomeric composition as defined according to the invention, comprising adding 1 to 40 preferably 5 to 20 parts by weight of one or more coagents and a free radical generating compound as curing agent, as defined above according to the invention, to 100 parts of the one or more elastomers and then, vulcanizing in the presence of the said free radical generating compound, as defined above. Vulcanized rubber articles prepared according to this method are part of the present invention.

The vulcanized articles of the invention can be in any form, for example in the form of a tire component, a rubber article for automotive and industrial applications and an engineered rubber product selected from the group consisting of belts, hoses, rubber gaskets, rings, engine mounts, vibration isolation mounts and rubber rollers.

The said terminally-functional polybutadiene acrylates are produced from alkoxylated polybutadiene diols of corresponding number average molecular weight Mn of 1000 to 12000 g/mol and they can contain only 1/10th of the amount of active (meth)acrylate functionality when compared to conventional (meth)acrylated monomeric coagents at equivalent phr loadings. They yet increase crosslink density and provide improved physical properties versus the conventional coagents. Scorch inhibiting additives are not required; however, in some cases they may provide additional scorch protection.

The alkoxylated polybutadiene acrylates of the invention can be formed by transesterification, direct esterification or by reaction with acrylic and/or methacrylic halides or anhydrides. Transesterification and direct esterification are the preferred industrial methods. More particularly, in the case of transesterification, the process of preparing the final polymer of the invention comprises a transesterification reaction between the corresponding hydroxyl terminated alkoxylated polybutadiene resin, preferably the corresponding diol and a low molecular weight acrylate and/or methacrylate ester, which can be preferably selected from : methyl acrylate, ethyl acrylate, n-butyl or isobutyl or tertiobutyl acrylate, methyl methacrylate, ethyl methacrylate, n-butyl or isobutyl or tertiobutyl methacrylate. In such a case, the transesterification reaction is preferably catalyzed by at least a catalyst selected from : metal alkoxides, metal oxides, Lewis acids or other catalysts or combinations, known in the art to catalyze transesterification reactions. Molecular weights Mn are in the range of 500 to 15,000 Daltons, preferably 1000 to 12,000. For polybutadiene resins, microstructure refers to the amounts 1,2- vs. 1,4 - addition and the ratio of cis to trans double bonds in the 1,4 -addition portion. The amount of 1,2- addition is often referred to as vinyl content. The vinyl content of the polybutadiene can range from about 5% to about 90%. The ratio of cis to trans double bonds can range from about 1:10 to about 10:1. The average number of reactive terminal hydroxyl groups per molecule can range from about 1 to 3. A preferred range is from about 1.0 to 2.0 and more preferably 2.0. The alkoxylated terminally functional polybutadiene (meth)acrylates of Formula I are described in Klang, et al., U.S. Serial No. 10/938,221, which is hereby incorporated by reference.

A second option in preparing the acrylate terminated alkoxylated polybutadienes and more particularly those of Formula I is direct esterification of the corresponding hydroxyl terminated alkoxylated polybutadiene with acrylic and/or methacrylic acid, halide or anhydride. In direct esterification with acrylic and/or methacrylic acid, esterification catalysts can be used selected from sulfuric acid, p-toluenesulfonic acid methanesulfonic acid or other strong mineral or organic acids known in the art to catalyze esterification reactions. The said hydroxyl-terminated polybutadiene resins are preferably obtained by anionic polymerization of butadiene.

It is also possible that the said polybutadiene hydroxyl-terminated resin is an anionically obtained copolymer of butadiene with other anionically polymerizable dienes and/or comonomers such as (but not limited to) : isoprene or vinyl aromatic monomers such as styrene. The said copolymers may be random or block copolymers, the block copolymers being preferably diblock copolymers. As examples of such random or block copolymers may be cited styrene-butadiene or styrene-isoprene copolymers.

More particularly, the said alkoxylated polybutadiene acrylate bears terminal acrylate ester groups and preferably is a difunctional one (diacrylate). More preferably, the said polybutadiene contains at least 50% vinyl microstructure (at least 50% of the total unsaturation).

The said elastomer or blend of elastomers according to the present invention can be selected from the group of polydienes, copolymers of dienes and vinyl aromatic monomers, copolymers of dienes and acrylonitrile monomer, copolymers of ethylene and propylene, terpolymers of ethylene, propylene, and diene-containing monomers, hydrogenated forms of copolymers of dienes and acrylonitrile monomer, and hydrogenated forms of terpolymers of dienes, acrylonitrile monomers, and carboxylated monomers.

The elastomers with which the said terminally-functional polybutadiene acrylates may be utilized in accordance with the present invention include, without limitation, the elastomeric organic high polymers, including natural rubber and the various synthetic rubbers (or rubbery polymers, the term "polymers" including "copolymers") which cure with a free radical generating compound or radiation source. In general, these curable rubbers are polymers of conjugated dienes or polymers with easily abstractable hydrogen wherein the monomers are linked through carbon-carbon bonds. Illustrative synthetic rubbery polymers of conjugated dienes include, without limitation : synthetic polyisoprene, styrene-butadiene rubbers, polybutadiene rubbers, butyl rubber, bromobutyl rubber, chlorobutyl rubber, the neoprenes, ethylene propylene rubbers, nitrile elastomers, silicone elastomers, thermoplastic elastomers, fluoroelastomers, high styrene butadiene copolymers, vinyl acetate ethylene copolymers, chlorinated polyethylene rubber, chlorosulfonated polyethylene elastomer, polyethylene and reclaimed rubber.

The term "peroxide-curable" according to the present invention, except if otherwise specified, should be considered as meaning "curable by means of vulcanizing agents or compounds which are able to thermally decompose and to generate free radicals which can initiate the cure or vulcanization of the said rubber composition". Vulcanizing agents that decompose to generate free radicals during the curing cycle may be employed as curing agents to cure the elastomers in the compositions and methods of the present invention. Suitable free radical generating compounds include, without limitation, peroxides, percarbonates, azo compounds and the like.

Ditertiary peroxide curing compounds are the preferred free radical generating compounds. These ditertiary peroxide curing agents contain at least one peroxy group disposed between tertiary carbon atoms, which tertiary carbon atoms are linked to carbon atoms constituting portions of each of the appended groups, which appended groups may be alkyl (including straight, branched or cyclic), alkenyl, or aryl groups, or mixtures of such groups, and which appended groups may be further substituted by non-hydrocarbon groups, for example, ethers, additional peroxy groups, or halogens, such as chlorine, which inorganic peroxides do not interfere with either the curing process or the cured elastomeric product.

Illustrative organic peroxides in accordance with the above description include : di-t-butyl peroxide, dicumyl peroxide, 2,5-bis(t-butylperoxy)-2,5-dimethyl-hexane, α,α'-bis-(t-butylperoxy) diisopropyl benzene, t-butylcumyl peroxide, and 2,5-dimethyl-2,5-di(t-butylperoxy)hexyne-3.

Suitable organic peroxides may also include, without limitation, acyl peroxides, peroxy ketals, peroxy esters, and peroxy carbonates. Examples of such peroxides include, without limitation, dibenzoyl peroxide, di-(p-chloro-benzoyl) peroxide, di-(2,4-dichlorobenzoyl) peroxide, methyl ethyl ketone peroxide, cyclohexanone peroxide, t-butyl peroxide, t-butyl peroxy(2-ethylhexanoate), t-butylperoxyisobutyrate, O,O-t-butyl-O-isopropylmonoperoxy-carbonate, t-butylperoxy pivalate, dimethyl-di(benzoylperoxy)hexane, t-butyl-peroxy (2-ethylbutyrate), 1,1-di-t-butyl peroxy-3,3,5-trimethylcyclohexane, and n-butyl-bis(t-butylperoxy)-valerate, t-butylperoxy benzoate, 1,1-di(t-butylperoxy)cyclohexane, 4-methyl-4-butylperoxy-2-pentanone, ethyl 3,3-di(t-butylperoxy) butyrate, O,O-t-butyl O-(2-ethylhexyl)monoperoxy carbonate and the like. The foregoing organic peroxides may be used alone or in combination and are commercially available.

The amount of free radical generating compound used in the present invention may be varied depending on the elastomer and coagent selected. Hence, the required amount of free radical generating compound required to practice the present invention is a cure-effective amount readily ascertainable by one of ordinary skill in the art. Generally, an amount from about 0.1 to about 20 parts by weight, preferably from about 0.5 to about 10 parts by weight, per hundred parts by weight of the elastomer or blend of elastomers employed.

Inert fillers may be included in the methods and curable compositions of the invention. If an inert filler is desired, any known or conventional filler which does not interfere with the vulcanization process described herein may be used and such fillers are desirable in finely divided form. Suitable fillers include, but are not limited to, the following : silica and silicates, thermal blacks (i.e., furnace, channel or lamp carbon black), clays, kaolin, diatomaceous earth, zinc oxide, cork, titania, cotton floc, cellulose floc, leather fiber, elastic fiber, plastic flour, leather flour, fibrous fillers such as glass and synthetic fibers, metal oxides and carbonates and talc. The amount of inert filler is dictated by its type and the intended end use of the composition and, in general, is from 0 to 200, preferably between 0 and 150 and, more preferably, between 50 and 100 parts by weight for 100 parts by weight of the elastomer or of the blend of elastomers.

Other additives which may be added to the curable composition of the present invention, depending upon the intended end-use of the cured elastomer, include antioxidants, UV stabilizers, antiozonants, plasticizers, mold release agents, tackifiers, anti-tack agents, dispersants, solvents, softening agents, fatty acids, processing aids, coloring agents and the like.

The second subject of the invention relates to a method of making a peroxide-curable (vulcanizable) rubber composition as defined according to the invention, comprising adding from 1 to 40 parts of a coagent comprising at least one terminally-functional polybutadiene acrylate and/or methacrylate and a peroxide as free radical generating curing agent, to 100 parts of a peroxide-curable rubber elastomer or blend of elastomers.

More particularly, such a rubber article may be selected from the group of : tire components, rubber articles for automotive and industrial applications, engineered rubber products selected from belts (including transmission belts and transport belts), hoses, rubber gaskets, rings, engine mounts, vibration isolation mounts and rubber rollers.

The aforementioned ingredients are mixed by any conventional means. Mixing may be accomplished by charging the ingredients to a Banbury mixer or a rubber mixing mill and intimately mixing the ingredients until the composition is uniform. The temperature of the mixing operation is not critical, but should be below temperatures at which the curing reaction commences. Generally, normal rubber milling practice is employed.

To obtain a vulcanized rubber from the said peroxide-curable rubber composition, the required curing times, in general, range from about 1 to 30 minutes and preferably from about 5 to 15 minutes, at a suitable cure temperature range. Cure temperatures should be sufficient thermally to decompose the free-radical generating compound. Thus, the selection of the cure temperature will be predicated mainly upon the free radical generating compound that is selected. The temperatures useful in the present invention may vary between wide limits such as from 90°C to 250°C and preferably from 140°C to about 215°C. For curing large rubber rolls, cure times of 24 hours are common to avoid stressing the roll.

Another aspect of the invention is a vulcanized (cured) rubber article which results from the curing (vulcanization) of at least one peroxide-curable rubber composition as defined according to the invention.

The invention will be clarified further by a consideration of the following examples, which are intended to be purely exemplary.

### EXAMPLES

The following examples, in which all parts and percentages are by weight based on parts per hundred of rubber (phr) unless otherwise indicated, are presented to illustrate a few embodiments of the invention and comparisons with other compositions.

The compounded stock originates as a masterbatch containing elastomer, filler, zinc oxide, stearic acid and process oil. A terpolymer of ethylene propylene diene monomer (EPDM) comprised of 55% ethylene and 4.9% 5-ethylidene-2-norbornene by weight with a Mooney viscosity of 40 (ASTM D 1646), was used, in addition to a semi-reinforcing carbon black (N660) at 100 phr. Fifty phr of paraffinic oil with a viscosity of 33 centistokes at 100°C (ASTM D 445), a pour point of -12°C (ASTM D 97) and an aniline point of 129°C (ASTM D 611) was used as a process aid. The rubber chemicals zinc oxide and stearic acid were also mixed at 5 and 1 phr, respectively. One phr of 2,2,4-trimethyl-1,2-dihydroquinoline (polymerized) was used as antioxidant. This stock was prepared in a quantity sufficient to use for all evaluations contained in the Examples. The invention is demonstrated by adding to the masterbatch subsequent curatives on a two roll mill. After addition of 7.5 phr of dicumyl peroxide carried on kaolin clay (40% actives) and coagent, the productive compound was masticated on unheated rolls for a minimum of 10 minutes at a roller rpm differential of the ratio 1.3 to 1.0. The compound was then sheeted off the mill and held in preparation for testing.

Cure rheometry was performed on a moving die rheometer (MDR) according to ASTM D 5289. Cured vulcanizates were formed by compression molding at 160°C for 35 minutes at an arc degree deflection of 3°. State of cure is given as delta torque (M_{H}-M_{L}) as reported from the MDR. Scorch safety was characterized by the time to a two point rise in torque (ts2). Tensile testing was performed according to ASTM D 412 on a tensile tester. Compression set was evaluated after heating at 100°C for 22 hours (ASTM D 395-B).

The terminally-functional alkoxylated polybutadiene (meth)acrylate was prepared in accordance to the procedure outlined below. A 1 liter multi-neck round bottom flask fitted with a mechanical agitator, thermocouple, air sparge tube and Dean-Stark trap was charged with heptane (157 g), acrylic acid (43 g), methanesulfonic acid (3.2 g), hydroquinone monomethyl ether (1.9 g) and a hydroxyl terminated polybutadiene resin (424 g), with hydroxyl groups derived from ethylene oxide (degree of alkoxylation = 2) (2 ethylene oxide units per hydroxyl), having hydroxyl number of 50 mg KOH/g and a calculated number average molecular weight Mn of 2244 g/mol. The mixture was heated to reflux to remove water of reaction and reflux was maintained until water production stopped. After removal of the strong acid catalyst, solvent and excess acrylic the final product was obtained as a viscous light brown liquid. The coagent is a terminally functional alkoxylated polybutadiene diacrylate.

Comparative coagent materials are included in Table 1.

**Table 1**

| **Chemical** | **Acrylate** | **Vinyl Content (Polymer)** | **Molecular** |
|---|---|---|---|
| **Description** | **Functionality** | **(%)** | **Weight (g/mol)** |
| | | | |
| 1,4-Butanediol Diacrylate | 2 | -- | 198 |
| Trimethylolpropane Triacrylate | 3 | -- | 296 |
| Poly(butadiene) | 0 | 65 | 3000 |
| Poly(butadiene) | 0 | 65 | 2000 |

### EXAMPLES 1 - 6 (Invention : Examples 2-6)

Examples 2-6 describe the invention. Example 1 is a control (without polybutadiene diacrylate) and was prepared by mixing 7.5 phr of peroxide alone to the masterbatch outlined in Table 2. Examples 2-6, representing the invention, were prepared by adding increasing loadings of terminally-functional polybutadiene diacrylate coagent to the masterbatch in addition to the peroxide. Cure kinetics and physical properties are reported which demonstrate that the addition of the functional polymeric coagent improves the state of cure leading to an increase in tensile strength and modulus while lowering compression set.

**Table 2**

| | | | **Examples** | | | |
|---|---|---|---|---|---|---|
| **Ingredient (phr)** | **1** | **2** | **3** | **4** | **5** | **6** |
| | | | | | | |
| EPDM | 100 | 100 | 100 | 100 | 100 | 100 |
| Carbon Black | 100 | 100 | 100 | 100 | 100 | 100 |
| Paraffinic Oil | 50 | 50 | 50 | 50 | 50 | 50 |
| Zinc Oxide | 5 | 5 | 5 | 5 | 5 | 5 |
| Stearic Acid | 1 | 1 | 1 | 1 | 1 | 1 |
| Antioxidant | 1 | 1 | 1 | 1 | 1 | 1 |
| | | | | | | |
| Polybutadiene Diacrylate | | 2 | 5 | 10 | 15 | 20 |
| Dicumyl peroxide | 7.5 | 7.5 | 7.5 | 7.5 | 7.5 | 7.5 |
| | | | | | | |
| **Delta Torque (dNm)** | 17.9 | 24.8 | 28.0 | 29.7 | 29.1 | 27.5 |
| **Scorch Time (minutes)** | 1.48 | 1.10 | 0.94 | 0.93 | 1.08 | 0.99 |
| | | | | | | |
| **Tensile Strength (MPa)** | 10.15 | 12.15 | 12.62 | 12.28 | 12.22 | 11.76 |
| **100% Modulus (MPa)** | 1.74 | 2.43 | 2.65 | 3.07 | 3.67 | 4.07 |
| | | | | | | |
| **Compression Set (% )** | 24.0 | 15.3 | 12.6 | 11.4 | 11.5 | 9.9 |

### EXAMPLES 7 - 12 Comparative

The comparative Examples 7-12 given in Table 3 utilize the monomeric coagent 1,4-butanediol diacrylate. The compounds were prepared in a similar manner as outlined in the previous Examples. At identical loadings, the monomeric diacrylate displays similar delta torque and tensile properties as the invention Examples 2-6, but increased compression set. In addition, scorch safety is markedly reduced using the monomeric diacrylate.

**Table 3**

| | | | **Examples** | | | |
|---|---|---|---|---|---|---|
| **Ingredient (phr)** | **7** | **8** | **9** | **10** | **11** | **12** |
| | | | | | | |
| EPDM | 100 | 100 | 100 | 100 | 100 | 100 |
| Carbon Black | 100 | 100 | 100 | 100 | 100 | 100 |
| Paraffinic Oil | 50 | 50 | 50 | 50 | 50 | 50 |
| Zinc Oxide | 5 | 5 | 5 | 5 | 5 | 5 |
| Stearic Acid | 1 | 1 | 1 | 1 | 1 | 1 |
| Antioxidant | 1 | 1 | 1 | 1 | 1 | 1 |
| | | | | | | |
| 1,4-Butanediol Diacrylate | | 2 | 5 | 10 | 15 | 20 |
| Dicumyl peroxide | 7.5 | 7.5 | 7.5 | 7.5 | 7.5 | 7.5 |
| | | | | | | |
| **Delta Torque (dNm)** | 19.1 | 23.7 | 27.6 | 27.9 | 29.0 | 24.5 |
| **Scorch Time (minutes)** | 1.42 | 0.65 | 0.64 | 0.53 | 0.42 | 0.54 |
| | | | | | | |
| **Tensile Strength (MPa)** | 10.78 | 13.57 | 13.38 | 13.46 | 12.59 | 13.13 |
| **100% Modulus (MPa)** | 1.51 | 2.58 | 3.10 | 3.60 | 3.72 | 4.02 |
| | | | | | | |
| **Compression Set (% )** | 24.3 | 14.5 | 12.9 | 13.3 | 12.6 | 14.7 |

### EXAMPLES 13 - 18 Comparative

The comparative Examples 13-18 given in Table 4 utilize a second common monomeric coagent, trimethylolpropane triacrylate. This product also contains a proprietary scorch inhibitor. The compounds were prepared in a similar manner as outlined in the previous Examples. At identical loadings, the monomeric triacrylate displays similar delta torque and tensile properties as previous Examples. While scorch safety is improved relative to Examples 7-12, the scorch protection provided by the invention is greater.

**Table 4**

| | | | **Examples** | | | |
|---|---|---|---|---|---|---|
| **Ingredient (phr)** | **13** | **14** | **15** | **16** | **17** | **18** |
| | | | | | | |
| EPDM | 100 | 100 | 100 | 100 | 100 | 100 |
| Carbon Black | 100 | 100 | 100 | 100 | 100 | 100 |
| Paraffinic Oil | 50 | 50 | 50 | 50 | 50 | 50 |
| Zinc Oxide | 5 | 5 | 5 | 5 | 5 | 5 |
| Stearic Acid | 1 | 1 | 1 | 1 | 1 | 1 |
| Antioxidant | 1 | 1 | 1 | 1 | 1 | 1 |
| | | | | | | |
| Trimethylolpropane Triacrylate | | 2 | 5 | 10 | 15 | 20 |
| Dicumyl peroxide | 7.5 | 7.5 | 7.5 | 7.5 | 7.5 | 7.5 |
| | | | | | | |
| **Delta Torque (dNm)** | 19.4 | 27.0 | 28.2 | 29.1 | 29.0 | 27.7 |
| **Scorch Time (minutes)** | 1.36 | 0.58 | 0.59 | 0.61 | 0.64 | 0.80 |
| | | | | | | |
| **Tensile Strength (MPa)** | 8.76 | 12.42 | 12.73 | 12.44 | 12.22 | 11.66 |
| **100% Modulus (MPa)** | 1.72 | 2.58 | 3.04 | 3.56 | 4.02 | 4.51 |
| | | | | | | |
| **Compression Set (%)** | 24.2 | 15.2 | 11.4 | 11.2 | 11.0 | 10.5 |

### EXAMPLES 19 - 24 Comparative

The comparative Examples 19-24 set forth in Table 5 utilize a polybutadiene resin coagent which contains no terminal acrylate functionality. The compounds were prepared in a similar manner as outlined in the previous Examples. At identical loadings, the comparative unfunctional resin displays reduced delta torque and tensile properties and inferior compression set, when compared to the Examples of the invention, Examples 2-6. Although scorch protection is improved versus the invention Examples, physical properties are more important and are improved in the invention Examples.

**Table 5**

| | | | **Examples** | | | |
|---|---|---|---|---|---|---|
| **Ingredient (phr)** | **19** | **20** | **21** | **22** | **23** | **24** |
| | | | | | | |
| EPDM | 100 | 100 | 100 | 100 | 100 | 100 |
| Carbon Black | 100 | 100 | 100 | 100 | 100 | 100 |
| Paraffinic Oil | 50 | 50 | 50 | 50 | 50 | 50 |
| Zinc Oxide | 5 | 5 | 5 | 5 | 5 | 5 |
| Stearic Acid | 1 | 1 | 1 | 1 | 1 | 1 |
| Antioxidant | 1 | 1 | 1 | 1 | 1 | 1 |
| | | | | | | |
| Poly(butadiene), 3000 g/mol Mn | | 2 | 5 | 10 | 15 | 20 |
| Dicumyl peroxide | 7.5 | 7.5 | 7.5 | 7.5 | 7.5 | 7.5 |
| | | | | | | |
| **Delta Torque (dNm)** | 17.1 | 20.4 | 22.0 | 22.5 | 23.1 | 20.6 |
| **Scorch Time (minutes)** | 1.42 | 1.29 | 1.41 | 1.53 | 1.73 | 1.72 |
| | | | | | | |
| **Tensile Strength (MPa)** | 11.33 | 12.42 | 12.71 | 12.69 | 11.92 | 11.64 |
| **100 % Modulus (MPa**) | 1.86 | 2.27 | 2.47 | 2.63 | 2.72 | 2.47 |
| | | | | | | |
| **Compression Set (%)** | 24.7 | 17.3 | 17.4 | 14.7 | 16.7 | 17.4 |

### EXAMPLES 25 - 30 Comparative

The comparative Examples 25-30 in Table 7 utilize a blend of the monomeric diacrylate material evaluated in Examples 7-12 and an unfunctional polybutadiene resin. The binary blends were prepared (see Table 6 below) such that the molar concentration of acrylate and vinyl groups is equivalent to that of the polybutadiene diacrylate in the invention Examples at a given phr. The molar concentration of acrylate functionality in the 1,4-butanediol diacrylate was calculated to be 10 mmol per gram of monomer. The molar concentration of acrylate functionality in the polybutadiene diacrylate which embodies the invention contains 1 mmol per gram of polymer resin. The coagent blends, identified as Blend A through E, are described in Table 6.

**Table 6**

| | **1,4-Butanediol Diacrylate** | **Poly(butadiene), 2000 g/mol Mn** |
|---|---|---|
| **Blend** | **(phr)** | **(phr)** |
| | | |
| A | 0.2 | 2.0 |
| B | 0.5 | 5.0 |
| C | 1.0 | 10.0 |
| D | 1.5 | 15.0 |
| E | 2.0 | 20.0 |

The compounds were prepared in a similar manner as outlined in the previous Examples and the results of testing are provided in Table 7. Scorch protection and compression set similar to those given by the invention Examples. However, at identical loadings, the blends produce delta torque and modulus properties inferior to those obtained in invention Examples 2-6.

**Table 7**

| | | | **Examples** | | | |
|---|---|---|---|---|---|---|
| **Ingredient (phr)** | **25** | **26** | **27** | **28** | **29** | **30** |
| | | | | | | |
| EPDM | 100 | 100 | 100 | 100 | 100 | 100 |
| Carbon Black | 100 | 100 | 100 | 100 | 100 | 100 |
| Paraffmic Oil | 50 | 50 | 50 | 50 | 50 | 50 |
| Zinc Oxide | 5 | 5 | 5 | 5 | 5 | 5 |
| Stearic Acid | 1 | 1 | 1 | 1 | 1 | 1 |
| Antioxidant | 1 | 1 | 1 | 1 | 1 | 1 |
| | | | | | | |
| Blend A | | 2.2 | | | | |
| Blend B | | | 5.5 | | | |
| Blend C | | | | 11 | | |
| Blend D | | | | | 16.5 | |
| Blend E | | | | | | 22 |
| Dicumyl peroxide | 7.5 | 7.5 | 7.5 | 7.5 | 7.5 | 7.5 |
| | | | | | | |
| **Delta Torque (dNm)** | 17.3 | 21.4' | 23.6 | 25.1 | 26.3 | 25.4 |
| **Scorch Time (minutes)** | 1.63 | 1.05 | 1.09 | 1.02 | 1.00 | 1.13 |
| | | | | | | |
| **Tensile Strength (MPa)** | 10.72 | 12.11 | 12.57 | 12.80 | 12.75 | 12.24 |
| **100% Modulus (MPa)** | 1.53 | 1.87 | 2.02 | 2.43 | 2.49 | 2.64 |
| | | | | | | |
| **Compression Set (%)** | 26.1 | 16.0 | 10.2 | 12.7 | 10.3 | 10.6 |

While the invention has been described and exemplified in detail, various alternative embodiments and improvements should become apparent to those skilled in this art without departing from the spirit and scope of the invention.

## Claims

1. An elastomeric composition, wherein it comprises by weight :
a) 100 parts of one or more elastomers,
b) from 1 to 40 parts of one or more coagents comprising one more terminally-functional alkoxylated polybutadiene (meth)acrylates
c) from 0 to 200 parts of a filler material.

2. The elastomeric composition as defined according to claim 1, wherein the said terminally-functional alkoxylated polybutadiene (meth)acrylates are of Formula I : 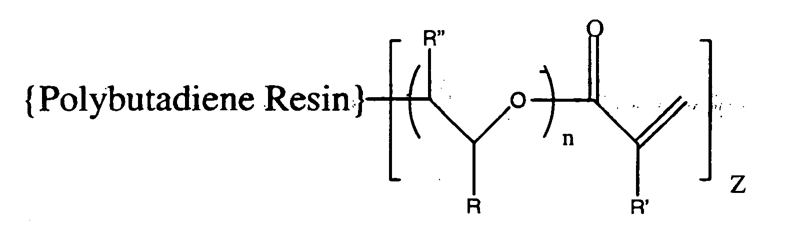 wherein,
"polybutadiene resin" is a butadiene homopolymer or copolymer radical (mono to trivalent),
R is H, Me, Et or C₆H₅,
R' is H or Me,
R" is H or Me,
n = 1 to 100, and
Z = 1 to 3.

3. The composition of claims 1 or 2, wherein the said terminally-functional alkoxylated polybutadiene (meth)acrylates of Formula I, have a number average molecular weight Mn from 1000 to 12000.

4. The composition of any one of claims 1 to 3, wherein the said terminally-functional alkoxylated polybutadiene (meth)acrylates of Formula I have R' = H.

5. The composition of any one of claims 1 to 4, wherein the said polybutadiene acrylate is a difunctional acrylate.

6. The composition of any one of claims 1 to 5, wherein the said polybutadiene acrylate contains at least 50% vinyl microstructure.

7. The composition of any one of claims 1 to 6, wherein the said polybutadiene acrylate is present at 5 to 20 parts per 100 parts by weight of the said one or more elastomers.

8. The composition of any one of claims 1 to 7, wherein the the said one or more elastomers are selected from the group of polydienes, copolymers of dienes and vinyl aromatic monomers, copolymers of dienes and acrylonitrile monomer, copolymers of ethylene and propylene, terpolymers of ethylene, propylene, and diene-containing monomers, hydrogenated forms of copolymers of dienes and acrylonitrile monomer, and hydrogenated forms of terpolymers of dienes, acrylonitrile monomers, and carboxylated monomers.

9. The composition of any one of claims 1 to 8, wherein the said composition further comprises as curing agent, at least one free-radical generating compound selected from peroxides, percarbonates or azo compounds.

10. The composition of claim 9, wherein it is a peroxide-curable composition.

11. The composition of claims 9 or 10, wherein the said free-radical producing peroxide generating compound is a peroxide selected from di-tertiary organic peroxides.

12. The composition of any one of claims 9 to 11, wherein the said curing agent is a di-tertiary organic peroxide in an amount of about 0.1 to 20 parts per 100 parts of the said one or more elastomers.

13. The composition of any one of claims 1 to 12, wherein the said filler material is present in an amount of up to 150 parts.

14. A method of preparing a vulcanized elastomeric composition, as defined according to any one of claims 1 to 13, wherein it comprises adding from 1 to 40 parts of one or more coagents comprising one or more terminally-functional polybutadiene (meth)acrylates and a free radical generating compound as curing agent, to 100 parts of one or more elastomers and then, vulcanizing in the presence of the said free radical generating compound.

15. A vulcanized rubber article, wherein it results from the vulcanization of at least one elastomeric composition as defined according to any one of claims 1 to 13 or according to a method as defined in claim 14.

16. The article as defined according to claim 15, wherein it is selected from : tire components, rubber articles for automotive and industrial applications and engineered rubber products selected from belts, hoses, rubber gaskets, rings, engine mounts, vibration isolation mounts and rubber rollers.

## Patentansprüche

1. Elastomerzusammensetzung, enthaltend, bezogen auf das Gewicht:
a) 100 Teile eines oder mehrerer Elastomere,
b) 1 bis 40 Teile eines oder mehrerer Coagentien, umfassend ein oder mehrere endständig funktionelle alkoxylierte Polybutadien(meth)acrylate,
c) 0 bis 200 Teile eines Füllstoffs.

2. Elastomerzusammensetzung nach Anspruch 1, worin die endständig funktionellen alkoxylierten Polybutadien(meth)acrylate die Formel I aufweisen: 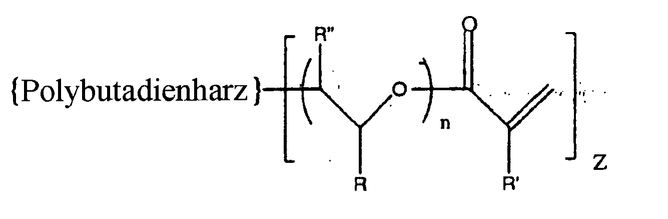 worin
"Polybutadienharz" für einen Butadien-Homopolymer- oder Butadien-Copolymerrest (ein- bis dreiwertig) steht,
R für H, Me, Et oder C₆H₅ steht,
R' für H oder Me steht,
R'' für H oder Me steht,
n = 1 bis 100 und
Z = 1 bis 3.

3. Zusammensetzung nach Anspruch 1 oder 2, worin die endständig funktionellen alkoxylierten Polybutadien(meth)acrylate der Formel I ein zahlenmittleres Molekulargewicht Mn von 1000 bis 12000 aufweisen.

4. Zusammensetzung nach einem der Ansprüche 1 bis 3, worin die endständig funktionellen alkoxylierten Polybutadien(meth)acrylate der Formel I R' = H aufweisen.

5. Zusammensetzung nach einem der Ansprüche 1 bis 4, worin es sich bei dem Polybutadienacrylat um ein difunktionelles Acrylat handelt.

6. Zusammensetzung nach einem der Ansprüche 1 bis 5, worin das Polybutadienacrylat mindestens 50% Vinylmikrostruktur enthält.

7. Zusammensetzung nach einem der Ansprüche 1 bis 6, worin das Polybutadienacrylat in einer Menge von 5 bis 20 Teilen auf 100 Gewichtsteile des oder der Elastomere vorliegt.

8. Zusammensetzung nach einem der Ansprüche 1 bis 7, worin das oder die Elastomere aus der Gruppe der Polydiene, Copolymere von Dienen und vinylaromatischen Monomeren, Copolymere von Dienen und Acrylnitril-Monomer, Copolymere von Ethylen und Propylen, Terpolymere von Ethylen, Propylen und dienhaltigen Monomeren, hydrierten Formen von Copolymeren von Dienen und Acrylnitril-Monomer und hydrierten Formen von Terpolymeren von Dienen, Acrylnitril-Monomeren und carboxylierten Monomeren ausgewählt sind.

9. Zusammensetzung nach einem der Ansprüche 1 bis 8, die ferner als Härter mindestens eine unter Peroxiden, Percarbonaten oder Azoverbindungen ausgewählte radikalbildende Verbindung enthält.

10. Zusammensetzung nach Anspruch 9, bei der es sich um eine peroxidhärtbare Zusammensetzung handelt.

11. Zusammensetzung nach Anspruch 9 oder 10, worin es sich bei der radikalbildenden Verbindung um ein unter di-tertiären organischen Peroxiden ausgewähltes Peroxid handelt.

12. Zusammensetzung nach einem der Ansprüche 9 bis 11, worin es sich bei dem Härter um ein di-tertiäres organisches Peroxid in einer Menge von etwa 0,1 bis 20 Teilen auf 100 Teile des oder der Elastomere handelt.

13. Zusammensetzung nach einem der Ansprüche 1 bis 12, worin der Füllstoff in einer Menge von bis zu 150 Teilen vorliegt.

14. Verfahren zur Herstellung einer vulkanisierten Elastomerzusammensetzung nach einem der Ansprüche 1 bis 13, bei dem man 1 bis 40 Teile eines oder mehrerer Coagentien, umfassend ein oder mehrere endständig funktionelle Polybutadien-(meth)acrylate, und eine radikalbildende Verbindung als Härter zu 100 Teilen eines oder mehrerer Elastomere gibt und dann in Gegenwart der radikalbildenden Verbindung vulkanisiert.

15. Vulkanisierter Kautschukartikel, der sich aus der Vulkanisation mindestens einer Elastomerzusammensetzung nach einem der Ansprüche 1 bis 13 oder nach einem Verfahren gemäß Anspruch 14 ergibt.

16. Artikel nach Anspruch 15, ausgewählt unter: Reifenkomponenten, Kautschukartikeln für Automobilanwendungen und technische Anwendungen und technischen Kautschukprodukten, ausgewählt unter Bändern, Schläuchen, Kautschukdichtungen, Ringen, Motorlager, Schwingungsdämpfungslager und Kautschukwalzen.

## Revendications

1. Composition élastomère, **caractérisée en ce qu'**elle comprend, en poids :
a) 100 parties d'un ou plusieurs élastomères,
b) de 1 à 40 parties d'un ou plusieurs co-agents comprenant un ou plusieurs (méth)acrylates de polybutadiène alcoxylé à terminaison fonctionnelle,
c) de 0 à 200 parties d'un matériau de charge.

2. Composition élastomère telle que définie selon la revendication 1, dans laquelle lesdits (méth)acrylates de polybutadiène alcoxylé à terminaison fonctionnelle répondent à la Formule I : 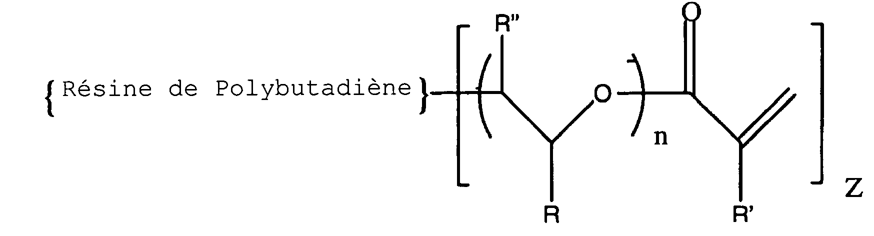 dans laquelle
« résine de polybutadiène » est un radical homopolymère ou copolymère de butadiène (mono- à trivalent),
R est H, Me, Et ou C₆H₅,
R' est H ou Me,
R'' est H ou Me,
n = 1 à 100, et
Z = 1 à 3.

3. Composition selon les revendications 1 ou 2, dans laquelle lesdits (méth)acrylates de polybutadiène alcoxylé à terminaison fonctionnelle de Formule I ont un poids moléculaire moyen en nombre Mn allant de 1000 à 12 000.

4. Composition selon l'une quelconque des revendications 1 à 3, dans laquelle lesdits (méth)acrylates de polybutadiène alcoxylé à terminaison fonctionnelle de Formule I ont R' = H.

5. Composition selon l'une quelconque des revendications 1 à 4, dans laquelle ledit acrylate de polybutadiène est un acrylate bifonctionnel.

6. Composition selon l'une quelconque des revendications 1 à 5, dans laquelle ledit acrylate de polybutadiène contient au moins 50% de microstructure vinylique.

7. Composition selon l'une quelconque des revendications 1 à 6, dans laquelle ledit acrylate de polybutadiène est présent sous forme de 5 à 20 parties pour 100 parties en poids desdits un ou plusieurs élastomères.

8. Composition selon l'une quelconque des revendications 1 à 7, dans laquelle lesdits un ou plusieurs élastomères sont choisis parmi le groupe constitué par les polydiènes, les copolymères de diènes et de monomères aromatiques de vinyle, les copolymères de diènes et de monomères d'acrylonitrile, les copolymères d'éthylène et de propylène, les terpolymères d'éthylène, de propylène, et de monomères contenant un diène, les formes hydrogénées de copolymères de diènes et de monomères d'acrylonitrile, et les formes hydrogénées de terpolymères de diènes, de monomères d'acrylonitrile et de monomères carboxylés.

9. Composition selon l'une quelconque des revendications 1 à 8, dans laquelle ladite composition comprend en outre, comme agent de durcissement, au moins un composé générant des radicaux libres choisi parmi les peroxydes, les percarbonates ou les composés azoïques.

10. Composition selon la revendication 9, **caractérisée en ce qu'**il s'agit d'une composition durcissable aux peroxydes.

11. Composition selon la revendication 9 ou 10, dans laquelle ledit composé générant des peroxydes produisant des radicaux libres est un peroxyde choisi parmi les peroxydes organiques di-tertiaires.

12. Composition selon l'une quelconque des revendications 9 à 11, dans laquelle ledit agent de durcissement est un peroxyde organique di-tertiaire présent en une quantité allant d'environ 0,1 à 20 parties pour 100 parties desdits un ou plusieurs élastomères.

13. Composition selon l'une quelconque des revendications 1 à 12, dans laquelle ledit matériau de charge est présent en une quantité allant jusqu'à 150 parties.

14. Méthode de préparation d'une composition élastomère vulcanisée, telle que définie selon l'une quelconque des revendications 1 à 13, **caractérisée en ce qu'**elle comprend l'addition de 1 à 40 parties d'un ou plusieurs co-agents comprenant un ou plusieurs (méth)acrylates de polybutadiène à terminaison fonctionnelle et d'un composé générant des radicaux libres comme agent de durcissement, à 100 parties d'un ou plusieurs élastomères, puis la vulcanisation en présence dudit composé générant des radicaux libres.

15. Article en caoutchouc vulcanisé**, caractérisé en ce qu'**il résulte de la vulcanisation d'au moins une composition élastomère telle que définie selon l'une quelconque des revendications 1 à 13 ou selon une méthode telle que définie selon la revendication 14.

16. Article tel que défini selon la revendication 15, **caractérisé en ce qu'**il est choisi parmi : les composants de pneus, les articles en caoutchouc destinés aux applications automobiles et industrielles et les produits de caoutchouc techniques choisis parmi les courroies, les durites, les joints statiques en caoutchouc, les bagues, les supports de moteur, les montages antivibratoires, et les rouleaux en caoutchouc.
